Europäisches Patentamt

European Patent Office

Office européen des brevets

(11) Veröffentlichungsnummer: **0 309 768 B1**

# EUROPÄISCHE PATENTSCHRIFT

(45) Veröffentlichungstag der Patentschrift: **20.05.92**

(21) Anmeldenummer: **88114397.8**

(22) Anmeldetag: **03.09.88**

(51) Int. Cl.⁵: **B60R 11/02**

(54) **Diebstahlsicherung für ein Kraftfahrzeug-Phonogerät.**

(30) Priorität: **01.10.87 DE 3733211**

(43) Veröffentlichungstag der Anmeldung:
**05.04.89 Patentblatt 89/14**

(45) Bekanntmachung des Hinweises auf die
Patenterteilung:
**20.05.92 Patentblatt 92/21**

(84) Benannte Vertragsstaaten:
**ES FR GB IT NL**

(56) Entgegenhaltungen:
**EP-A- 0 195 972**
**DE-A- 3 440 379**
**DE-C- 3 619 523**
**DE-U- 8 707 406**
**FR-A- 2 592 345**

(73) Patentinhaber: **DAIMLER-BENZ AKTIENGE-**
**SELLSCHAFT**
**Mercedesstrasse 136**
**W-7000 Stuttgart 60(DE)**

(72) Erfinder: **Holzhauer, Horst**
**Nagoldstrasse 29**
**W-7531 Schellbronn(DE)**
Erfinder: **Weikert, Günther**
**Kalkofenweg 23/9**
**W-7250 Weil der Stadt 5(DE)**
Erfinder: **Kneib, Rudi**
**Auf der Stelle 25**
**W-7032 Sindelfingen(DE)**
Erfinder: **Polic, Marko**
**Sommerhofenstrasse 104/1**
**W-7032 Sindelfingen(DE)**
Erfinder: **Robitschko, Peter**
**Kleines Egart 7**
**W-7032 Sindelfingen 6(DE)**
Erfinder: **Reinhard, Theodor**
**Panoramastrasse 46**
**W-7030 Böblingen(DE)**

**Beschreibung**

Die Erfindung bezieht sich auf eine Diebstahlsicherung für ein in einen Einbauschacht eines Kraftfahrzeugs eingebautes Phonogerät mit den Merkmalen des Oberbegriffs des Patentanspruches 1.

Eine Diebstahlsicherung mit diesen Merkmalen ist aus der im Prioritätsintervall veröffentlichten EP-A-0 249 071 bekannt.

Dort wird eine Anordnung eines Umschalters in einem Phonogerät-Gehäuse beschrieben, der im Falle unbefugten Ausbaus des Phonogerätes einen Diebmodul-Eingang von Masse- auf Plus-Potential umschaltet und damit das Phonogerät funktionsunfähig macht.

Der integrierte Umschalter hat zwar den Vorteil, daß er beim Ein- und Ausbau des Phonogerätes sicher betätigt wird und zuverlässig anspricht, es muß aber auch Einbauraum für den Umschalter und eine Öffnung für den diesen betätigenden Mechanismus (Schaltfeder, -wippe, -stößel) im Gerätegehäuse vorgesehen werden.

Bis auf die Schaltung, die die Funktionsunfähigkeit des Phonogerätes bewirkt, gehen die Merkmale des Oberbegriffs des Patentanspruchs 1 auch aus DE-U-87 07 406 hervor, wobei statt eines Diebmoduls eine Alarmanlage nebst einer deren Auslösung bei Geräteausbau in der Werkstatt verhindernden Sperrschaltung im Phonogerät vorgesehen ist. Wie beim vorgenannten Stand der Technik sind auch hier die alarmauslösenden Geber im Gehäuse des Phonogeräts selbst untergebracht.

Es ist auch ein innerhalb eines Phonogerätes vorgesehener Diebstahlschutz bekannt (EP-A-0 195 972), der bei Entnahme des Gerätes aus dem Einbauschacht einen Potentialwechsel an einem eingebauten Potentiometer bewirkt, wobei die Veränderung der am Potentiometer abgreifbaren Spannung als Signal für die Ansteuerung einer Betriebssperre bis zur Eingabe eines passenden Codewortes auswertbar ist.

Schließlich ist es bekannt (FR-A-2 592 345), zur geräteseitigen Standardisierung der rückwärtigen Anschlüsse eines in einen Einbauschacht einzusetzenden Phonogeräts einen einheitlichen Rückwanddeckel vorzusehen, der zum einen mit elektrischen Steckverbindungselementen versehen ist, zum anderen eine Betätigungskontur für einen fest fahrzeugseitig im Grund des Einbauschachts installierbaren Schalter einer Diebstahlsicherung aufweist. Dieser rahmenartige Rückwanddeckel, an dem auch eine mechanische Diebstahlsicherungseinrichtung angreift, wird über adapterartige Distanzstücke fest mit dem jeweils einzubauenden Phonogerät verblockt; zwischen dem Rückwanddeckel und dem Phonogerät sind fliegende elektrische Einzelsteckverbindungen vorgesehen.

Die Erfindung hat die Aufgabe, die gattungsgemäße Diebstahlsicherung so auszubilden, daS bei gleicher Sicherheit gegen Fehlfunktionen am Phonogerät selbst kein Einbau eines, den Ausbau eines Phonogerätes anzeigenden Gebers vorgenommen werden muß.

Diese Aufgabe wird erfindungsgemäß mit den kennzeichnenden Merkmalen des Patentanspruches 1 gelöst.

Die Merkmale der Unteransprüche kennzeichnen vorteilhafte Weiterbildungen der erfindungsgemäßen Diebstahlsicherung.

Obwohl der den Diebmodul ansteuernde elektrische Umschalter nun nicht mehr unmittelbar im Gehäuse des Phonogerätes angeordnet sein muß, wird er durch die Integration in ein gemeinsames Gehäuse mit Steckverbindungselementen, die unter anderem zur Stromversorgung des Phonogerätes dienen, zwangsläufig mit diesem gekoppelt, denn nach dem ordnungsgemäßen Anschließen der Steckverbindungen ist der Umschalter zwangsläufig in seiner aufgabengemäßen Position.

Steckverbindungen mit zugeordneten elektrischen Schaltern sind zwar an sich bekannt (Katalog DS 4/410, Ausgabe 1, "Steckverbinder" der Fa. Hirschmann, Esslingen, S. 178/179), und aus der DE-B-29 08 517 ist eine mehrpolige Anhänger-Steckdose mit einer Abschalteinrichtung für die Nebelschlußleuchte des Zugfahrzeugs bekannt.

Bei diesen Steckerverbindungen ist der jeweilige Um- bzw. Öffnerschalter an der Steckdose angeordnet und wird jeweils durch den entsprechenden Stecker betätigt.

Ein Ausführungsbeispiel für eine erfindungsgemäße Diebstahlsicherung ist in der Zeichnung dargestellt und wird im folgenden näher beschrieben.

Es zeigen

Figur 1    eine schematische Ansicht eines im Einbauschacht steckenden Phonogerätes mit dem rückwärtig eingesteckten gemeinsamen Gehäuse für Steckverbindung und Umschalter,

Figur 2    ein Stromlaufschema für den Zwischenstecker.

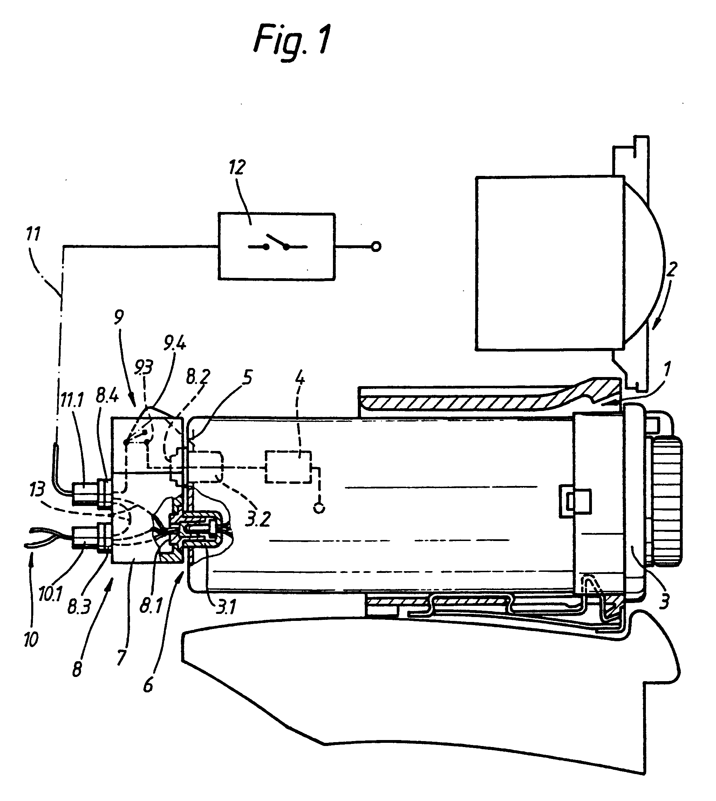

Nach Figur 1 ist in einem längs aufgeschnittenen Einbauschacht 1 einer Instrumententafel 2 eines Kraftfahrzeuges ein Radio eingeschoben. Im Radio 3 ist ein Diebmodul 4 angeordnet. An der Radio-Rückwand 5 ist eine mehrpolige Steckverbindung 6 aufgeschnitten dargestellt, die zur Stromversorgung des Radios dient und aus einem ersten radioseitigen Steckverbindungselement 3.1 und einem ersten Ausgangs-Steckverbindungselement 8.1 eines Zwischensteckers 8 besteht. Der Zwischenstecker 8 nimmt ferner in einem gemeinsamen Gehäuse 7 ein zweites Ausgangs-Steckverbindungselement8.2, ein erstes Eingangs-Steckverbindungselement 8.3, ein zweites Eingangs-Steckverbindungselement 8.4 und einen dreipoligen Umschalter 9 auf.

Das zweite Ausgangs-Steckverbindungselement 8.2 ist auf ein zweites radioseitiges Steckverbindungselement 3.2 gesteckt und verbindet einen Kontakt des Umschalters 9 mit dem Diebmodul 4. An das erste Eingangs-Steckverbindungselement 8.3 ist ein Stromversorgungskabelsatz 10 mittels eines Kabelsteckers 10.1 angeschlossen.

An das zweite Eingangs-Steckverbindungselement 8.4 ist über ein Kabel 11 und einen Kabelstecker 11.1 eine schaltbare Spannungsquelle 12 angeschlossen. Letztere kann ein Steuergerät einer Einbruch-Diebstahl-Warnanlage (EDW) sein, aber auch ein z.B. über einen schlüsselbetätigten Schalter schaltbarer Bordnetzanschluß.

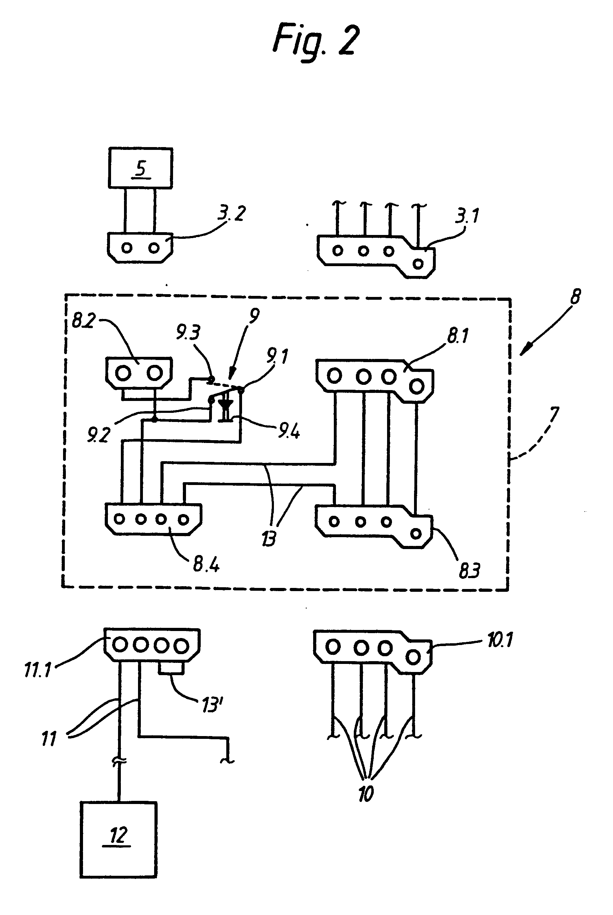

Die Funktionsweise der Diebstahlsicherung und die elektrische Anordnung des Zwischensteckers 8 werden aus Figur 2 deutlich. Gleiche Bezugsziffern bezeichnen gleiche Teile in Figur 1 und 2. Die schematisch dargestellten Steckverbindungselemente sind zum einen durch unterschiedliche Polzahlen und zum anderen durch unterschiedliche Außenkonturen unverwechselbar codiert. Kleine Kreise bezeichnen Pins, große Kreise die entsprechenden Kontakthülsen.

Der Umschalter 9 ist in seiner unbetätigten Grundstellung dargestellt und liegt mit seinem Schaltkontakt 9.1 an einem entweder potentialfreien oder an Masse angeschlossenen Festkontakt 9.2 an. Beim Anlaufen seiner Schaltwippe 9.4 am Rand des Einbauschachts 1 wird der Schaltkontakt 9.1 mit einem zweiten Festkontakt 9.3 verbunden (strichpunktiert in Figur 1). Damit ist auch eine elektrische Verbindung zwischen der schaltbaren Spannungsquelle 12 und dem Diebmodul 4 hergestellt.

Ist diese ein Steuergerät einer Einbruch-Diebstahl-Warnanlage, so "bemerkt" letzteres den beim Betätigen des Umschalters vorfallenden Potentialwechselvorgang und legt - sofern eingeschaltet bzw. geschärft - Plus-Potential an den Diebmodul 4. Das Radio wird betriebsunfähig, und Alarm wird erzeugt.

Ist die Spannungsquelle direkt über Schlüsselschalter vom Plus-Potential des Bordnetzes gespeist, so wird unmittelbar durch den Umschalter 9 selbst der Potentialwechsel am Diebmodul 4 geschaltet. Das Radio wird betriebsunfähig. Eine Fehlansteuerung des Diebmoduls 4 kann im regulären Betrieb nicht vorkommen, da der Umschalter 9 dann nicht mit ihm verbunden ist.

Der Zuverlässigkeit der Diebstahlsicherung dient ferner die UND-Verknüpfung beider Eingangs-Steckverbindungselemente 8.3, 8.4 des Zwischensteckers 8 durch eine Leitungsverbindung 13. Diese für die Stromversorgung des Radios benötigte (Plus- oder Masse-) Leitungsverbindung 13 wird am Eingangs-Steckverbindungselement 8.4 erst durch eine Brücke 13′ zwischen zwei Polen des Kabelsteckers 11.1 geschlossen. So müssen für die Inbetriebnahme des Radios 3 beide Kabelstecker 10.1 und 11.1 gesteckt sein. Es ist selbstverständlich, daß im Ausführungsbeispiel nach Figur 2 die Polanzahl der Steckverbindungen auf die funktionsnotwendigen Pole beschränkt ist. Bei Bedarf können mittels weiterer Pole auch andere Funktionen angeschlossen werden, die für die Diebstahlsicherung nicht relevant und für den Betrieb des Autoradios nicht unbedingt erforderlich sind.

Ebenfalls bei Bedarf können mechanische Abziehsicherungen am Zwischenstecker und an den Kabelsteckern vorgesehen werden, die vorzugsweise nur bei offenliegender Rückwand, d.h., bei ausgebautem Radio, gelöst werden können. Damit wird es unmöglich, die Betätigung des Umschalters beim Herausziehen zu umgehen.

Zum Werkstatt-Testbetrieb kann der Kabelstecker 10.1 direkt an das Steckverbindungselement 3.1 der Radiorückwand angeschlossen werden.

Schließlich fällt unter den Schutzanspruch auch ein gemeinsames Gehäuse für den Umschalter 9 und die Ausgangs-Steckverbindungselement 8.1 und 8.2 mit fest, also nicht steckbar angeschlossenen Kabelsätzen 10, 11.

## Patentansprüche

1. Diebstahlsicherung für ein in einen Einbauschacht (1) eines Kraftfahrzeuges eingeschobenes Phonogerät, insbesondere ein Radio (3), mit einem beim Herausziehen des Phonogerätes aus dem Einbauschacht durch dessen Wandung betätigten Umschalter (9), der in wenigstens einer Schaltstellung mit einem Steckverbindungselement (3.2) an der Phonogerät-Rückwand (5) und mit einem Diebmodul (4) des Phonogerätes elektrisch verbunden ist, und bei unbefugtem Herausziehen des Phonogerätes eine Ansteuerung des Diebmoduls (4) durch einen Potentialwechsel bewirkt, aufgrund dessen das Phonogerät funktionsunfähig geschaltet wird, wobei letzteres ferner an seiner Rückwand (5) mindestens ein mehrpoliges Steckverbindungselement (3.1) zu seiner Stromversorgung aus dem Bordnetz des Kraftfahrzeuges aufweist,
**dadurch gekennzeichnet,**
daß in einem gemeinsamen, auf die Phonogerät-Rückwand (5) zur Herstellung elektrischer Kontaktierung aufsteckbaren Gehäuse (7) der Umschalter (9) und zu den Steckverbindungselementen (3.1, 3.2) an der Phonogerät-Rückwand (5) passende, wenigstens mit einem Kontakt (9.3) des Umschalters (9) bzw. wenigstens mittelbar mit dem Bordnetz des Kraftfahrzeuges verbundene Ausgangs-Steckverbindungselemente (8.1, 8.2) angeordnet sind.

2. Diebstahlsicherung nach Anspruch 1,
**dadurch gekennzeichnet,**
daß das gemeinsame Gehäuse (7) das Gehäuse eines durch die Ausgangs-Steckverbindungselemente (8.1, 8.2) mit den Steckverbindungselementen (3.1, 3.2) an der Phonogerät-Rückwand und durch Eingangs-Steckverbindungselemente (8.3, 8.4) über Kabelstecker (10.1, 11.1) mit Kabelsätzen (10, 11) verbundenen Zwischensteckers (8) ist.

3. Diebstahlsicherung nach Anspruch 2,
**dadurch gekennzeichnet,**
daß in dem gemeinsamen Gehäuse (7) jeweils zwei mehrpolige Eingangs-Steckverbindungselemente (8.3, 8.4) und Ausgangs-Steckverbindungselemente (8.1, 8.2) vorgesehen sind und daß wenigstens eine Leitungsverbindung (13) zur Stromversorgung des Phonogerätes (3) von einem Pol eines Eingangs-Steckverbindungselementes (8.3) zu einem Pol des zweiten Eingangs-Steckverbindungselementes und von einem anderen Pol des zweiten Eingangs-Steckverbindungselementes (8.4) zu einem Pol eines Ausgangs-Steckverbindungselementes (8.1) geführt ist, wobei diese Leitungsverbindung (13) durch eine Brücke (13') zwischen zwei Polen des in das zweite Eingangs-Steckverbindungselement (8.4) einzusteckenden, im wesentlichen für die Diebstahlsicherung, jedoch nicht unmittelbar für die Stromversorgung des Phonogerätes (3) benötigten Kabelsteckers (11.1) geschlossen wird.

4. Diebstahlsicherung nach einem der vorstehenden Ansprüche,
**dadurch gekennzeichnet,**
daß der Umschalter (9) als durch eine Schaltwippe (9.4) betätigter Mikroschalter ausgeführt ist.

5. Diebstahlsicherung nach einem der vorstehenden Ansprüche,
**dadurch gekennzeichnet,**
daß der Umschalter (9) im regulären Einbauzustand an einem nicht mit dem Diebmodul (4) verbundenen Kontakt (9.2) anliegt und erst durch seine Betätigung beim Herausziehen des Phonogerätes (3) aus dem Einbauschacht (1) zu einer leitenden Verbindung mit dem Diebmodul (4) auf den anderen Kontakt (9.3) umgeschaltet wird.

6. Diebstahlsicherung nach Anspruch 3,
**dadurch gekennzeichnet,**
daß eine Einbruch-Diebstahl-Warnanlage (EDW, 12) über das zweite Eingangs-Steckverbindungselement (8.4) und den Umschalter (9) an das Phonogerät (3) angeschlossen ist, wobei deren Auslösung (Alarm, Potentialwechsel am Umschalter bzw. Diebmodul) durch die Betätigung des Umschalters (9) erfolgt.

7. Diebstahlsicherung nach Anspruch 1,
**dadurch gekennzeichnet,**
daß an den im regulären Einbauzustand nicht mit dem Diebmodul (4) verbundenen Umschalter (9) über einen vorzugsweise schlüsselbetätigten Schalter (12) Plus-Potential aus dem Bordnetz angelegt wird, wodurch bein unbefugtem Herausziehen der Diebmodul (4) direkt über den Umschalter (9) angesteuert wird, um das Phonogerät funktionsunfähig zu schalten.

8. Diebstahlsicherung nach Anspruch 2,
**dadurch gekennzeichnet,**
daß - an sich bekannte - mechanische Abziehsicherungen an allen Steckverbindungselementen bzw. Kabelsteckern vorgesehen sind.

**Claims**

1. Antitheft device for an audio apparatus inserted into a structural receptacle (1) of a motor vehicle, particularly a radio set (3), with a switch (9) actuated by the wall of the receptacle on the pulling of the audio apparatus out of the latter, said switch being at least in one switching position electrically connected with a plug-in connection element (3, 2) to the rear wall (5) of the audio apparatus and with an antitheft module (4) of the audio apparatus, and, on the unauthorized removal of the audio apparatus, effecting a setting-off of the antitheft module (4) through a change of potential, as a consequence of which the audio apparatus is switched into an inoperative mode, the audio apparatus having further on its rear wall (5) at least one multipolar plug-in connection element (3, 1) for energizing with current from the vehicle electrical system, characterized in that the switch (9) and output plug-in connection elements (8.1, 8.2) fitting the plug-in connection elements (3.1, 3.2) on the rear wall (5) of the audio apparatus, connected with at least one contact (9.3) of the switch (9) or at least indirectly with the electrical system of the motor vehicle, are mounted in a common housing (7) attachable to the rear wall (5) of the audio apparatus to establish an electric contact.

2. Antitheft device according to claim 1, characterized in that the common housing (7) is a housing of an attachment plug (8) connected by means of the output plug-in connection elements (8.1, 8.2) with the plug-in connection elements (3.1, 3.2) on the rear wall of the audio apparatus, and by means of input plug-in connection elements (8.3, 8.4) through cable plugs (10.1, 10.2,) with sets of cables (10, 11).

3. Antitheft device according to claim 2, characterized in that in the common housing (7) two multipolar input plug-in connection elements (8.3, 8.4) and output plug-in connection elements (8.1, 8.2) are respectively provided, and in that at least one lead connection (13) for energizing the audio apparatus (3) is passed from one pole of an input plug-in connection element (8.3) to a pole of the second input plug-in connection element, and from another pole of the second input plug-in connection element (8.4) to a pole of an output plug-in connection element (8.1), this lead connection (13) being closed by means of a bridge between two poles of the cable plug (11.1) to be plugged into the second input plug-in connection element (8.4) substantially required for the antitheft device, but not directly for the energizing of the audio apparatus (3).

4. Antitheft device according to one of the foregoing claims, characterized in that the switch (9) is designed as a microswitch actuated by a rocker switch (9.4).

5. Antitheft device according to one of the foregoing claims, characterized in that the switch (9) in the normal mounting position applies against a contact (9.2) not connected with the antitheft module (4) and is switched over to a conductive connection with the antitheft module (4) on the other contact (9.3) only when actuated on the removal of the audio apparatus (3) out of the structural receptacle (1).

6. Antitheft device according to claim 3, characterized in that a burglar alarm (EDW, 12) is connected to the audio apparatus (3) by means of the second input plug-in connection element (8.4) and the switch (9), its release (alarm, potential change at the switch or antitheft module) being effected by actuation of the switch (9).

7. Antitheft device according to claim 1, characterized in that plus-potential from the vehicle electrical system us applied to the switch (9) not connected with the antitheft module in the normal mounting state through a preferably key-actuated switch (12), the antitheft module (4), on unauthorized removal, being controlled directly via the switch (9) so as to make the audio apparatus inoperative.

8. Antitheft module according to claim 2, characterized in that per se known mechanical protections against removal are provided on all plug-in connection elements or cable plugs.

**Revendications**

1. Dispositif antivol pour un appareil audio, notamment un auto-radio (3), encastré dans un puits d'installation (1) d'un véhicule automobile, avec un commutateur (9) qui est actionné par la paroi de l'appareil audio lorsque ce dernier est extrait du puits d'installation et qui, dans au moins une position de commutation, est relié électriquement à un élément de connexion enfichable (3.2) sur la paroi arrière (5) de l'appareil et à un module antivol (4) de l'appareil et, en cas d'extraction non autorisée de l'appareil, produit un asservissement du module antivol (4) par une inversion de potentiel, sur la base de laquelle l'appareil est commuté dans un état d'incapacité de fonctionnement, l'appareil audio présentant en outre, sur sa paroi arrière (5), au moins un élément de connexion enfichable multipolaire (3.1) pour son alimentation en courant à partir du réseau de bord du véhicule automobile, caractérisé en ce que le commutateur (9), et des éléments de connexion enfichable de sortie (8.1, 8.2) adaptés aux éléments de connexion enfichable (3.1, 3.2) sur la paroi arrière (5) de l'appareil audio et reliés au moins à un contact (9.3) du commutateur (9) ou, respectivement, au moins indirectement au réseau de bord du véhicule automobile, sont disposés dans un boîtier commun (7), enclenchable sur la paroi arrière (5) de l'appareil pour réaliser la mise en contact électrique.

2. Dispositif antivol selon la renvendication 1, caractérisé en ce que le boîtier commun (7) est le boîtier d'un connecteur intermédiaire (8) relié par les éléments de connexion enfichable de sortie (8.1, 8.2) aux éléments de connexion enfichable (3.1, 3.2) sur la paroi arrière de l'appareil audio, et par des éléments de connexion enfichable d'entrée (8.3, 8.4) à des faisceaux de câbles (10, 11) par l'intermédiaire de connecteurs de câbles (10.1, 11.1).

9 EP 0 309 768 B1 10

3. Dispositif antivol selon la revendication 2, caractérisé en ce que deux éléments de connexion enfichable d'entrée multipolaires (8.3, 8.4) et deux éléments de connexion enfichable de sortie multipolaires (8.1, 8.2) sont prévus dans le boîtier commun (7), et en ce qu'au moins une jonction de circuits (13), pour l'alimentation en courant de l'appareil audio (3), mène d'un pôle d'un élément de connexion enfichable d'entrée (8.3) à un pôle du second élément de connexion enfichable d'entrée et d'un autre pôle du second élément de connexion enfichable d'entrée (8.4) à un pôle d'un élément de connexion enfichable de sortie (8.1), cette jonction de circuits (13) étant fermée par un pont (13') entre deux pôles du connecteur de câbles (11.1) qui s'enclenche dans le second élément de connexion enfichable d'entrée (8.4) et qui est nécessaire essentiellement pour la protection contre le vol, mais non directement pour l'alimentation en courant de l'appareil audio (3).

4. Dispositif antivol selon l'une des revendications précédentes, caractérisé en ce que le commutateur (9) est réalisé en forme de commutateur miniature actionné par une bascule (9.4).

5. Dispositif antivol selon l'une des revendications précédentes, caractérisé en ce que le commutateur (9), dans l'état normal d'installation, s'applique contre un contact (9.2) non relié au module anti-vol (4), et ce n'est que par son actionnement lors de l'extraction de l'appareil audio (3) du puits d'installation (1) qu'il est commuté sur l'autre contact (9.3), par une liaison conductrice avec le module antivol (4).

6. Dispositif antivol selon la revendication 3, caractérisé en ce qu'une installation d'alarme d'effraction (12) est raccordée à l'appareil audio (3) par l'intermédiaire du second élément de connexion enfichable d'entrée (8.4) et du commutateur (9), et est déclenchée (alarme, inversion de potentiel au commutateur ou encore au module antivol) par l'actionnement du commutateur (9).

7. Dispositif antivol selon la revendication 1, caractérisé en ce que, par l'intermédiaire d'un interrupteur (12) actionné de préférence par clé, le potentiel positif provenant du réseau de bord est appliqué au commutateur (9) qui, dans l'état normal d'installation, n'est pas relié au module antivol (4), de sorte qu'en cas d'extraction non autorisée, le module antivol (4) est directement asservi par le commutateur (9) pour commuter l'appareil audio dans un état d'incapacité de fonctionnement.

8. Dispositif antivol selon la revendication 2, caractérisé en ce que des moyens mécaniques en soi connus de protection contre l'arrachage sont prévus sur tous les éléments de connexions enfichables ou connecteurs de câbles.

6

# Fig. 1

EP 0 309 768 B1

# Fig. 2